# EUROPEAN PATENT APPLICATION

(11) **EP 1 387 294 A1**
(43) Date of publication of application: **04.02.2004**
(21) Application number: 02017045.2
(22) Date of filing: 29.07.2002
(51) Int. Cl.: G06F 17/30

(54) **Database model for hierarchical data formats**

(71) Applicant: DEUTSCHE THOMSON-BRANDT GMBH, 78048 Villingen-Schwenningen (DE)
(72) Inventor: Winter, Marco, 30173 Hannover (DE); Blawat, Meinolf, 30161 Hannover (DE); Janssen, Uwe, 30926 Seelze (DE); Li, Hui, 30419 Hannover (DE); Ostermann, Ralf, 30167 Hanover (DE)
(74) Representative: Thies, Stephan

(57) **Abstract**

The present invention relates to a method for mapping a hierarchical data format to a relational database management system.

It is an object of the invention to provide a method for mapping a hierarchical data format comprising descriptors 1, 10, 11 to a relational database management system capable of handling diverse types of hierarchical descriptors 1, 10, 11 in a fast manner for inserting descriptors 1, 10, 11, reading parts of descriptors 1, 10, 11, reading whole descriptors 1, 10, 11 and performing fast text queries.

According to the invention, the descriptors 1, 10, 11 are separated into portions of a common format, which are stored in a relation 20, 21, 22... in the relational database.

## Description

The present invention relates to a method for mapping a hierarchical data format to a relational database management system. Furthermore, the present invention relates to a database model and an apparatus for reading from and/or writing to recording media using such method.

The future of digital recording will be characterised by the preparation, presentation and archiving of added value data services, i.e. a recorder, like a DVR (Digital Video Recorder) for example, will store and handle additional information delivered by content providers like broadcasters or special services or even assembled by the user himself. Added value (metadata) is generated to give further information to the user. For example, added value may be a movie summary explaining the story, a listing of the actors etc. Also the provision of additional information facilitating navigation inside the movie constitutes added value. For example, a movie can be structured into sections, subsections etc. each having an individual title and possibly comprising further useful information.

For providing structural information and for transporting other metadata for multimedia objects like video or audio streams, an hierarchical data format is generally used. A well-known and widely accepted hierarchical data format is the extensible markup language XML. XML is a system for defining specialized markup languages that are used for transmitting formatted data. It is, therefore, also called a meta language, a language used for creating other specialized languages. XML data consists of text, which is organised in form of a plurality of descriptors. The text itself contains elements, attributes and content, i.e. the remaining text. Besides the use for multimedia objects, many other applications for XML are known.

It is to be expected that in the foreseeable future digital recorders will store quite a large amount of data in XML or another hierarchical data format in relational databases, since these databases are widely used and quite sophisticated. However, there is the problem that for storage the hierarchical data format has to be mapped to a relational database management system (RDBMS). A number of database models for XML have already been proposed. See for example Rahayu et al.: *Representation* of multilevel composite objects in relational databases. OOIS'98, Proceedings of the 1998 International Conference on Object Oriented Information Systems, pp221-238, or Zhang et al.: *On* Supporting Containment Queries in Relational Database Management Systems, ACM. Sigmod Record, vol.30, no.2 (2001), pp.425-36. However, no database model is known capable of handling diverse types of hierarchical descriptors in a fast manner for inserting descriptors, reading parts of descriptors, reading whole descriptors and performing fast text queries.

It is, therefore, an object of the invention to provide a method for mapping a hierarchical data format comprising descriptors to a relational database management system. It is another object of the invention to provide a database model and an apparatus for reading from and/or writing to recording media using such method.

According to the invention, the descriptors are separated into portions of a common format, which are stored in a relation in the relational database. The method has the advantage that it is independent of the structure of the stored descriptors. Only a restricted number of common formats is required for storing all types of descriptor formats. The common formats comprise, for example, elements, attributes, text etc. In this way each descriptor is analysed word by word, separated into its different components, and stored in the relation, which preferably is a table.

The method can be further improved by providing independent relations for the common formats. Every query uses only these relations. For example, a first relation contains only text, while a second relation contains elements etc. This enables fast and simple queries due to the restricted number of relations. If, for example, a text query has to be performed, only the relation containing text has to be searched. While it is advantageous to provide independent relations for all common formats, it is likewise possible to use a relation for more than one common format. For example, elements and attributes can be stored together in a first relation, while text is stored in a second relation.

According to a refinement of the invention, the method further comprises the step of storing information allowing recovery of the descriptor structure in the relations. When a query delivers only a single database entry, the complete structure of the descriptor belonging to the specific database entry can be recovered.

Advantageously, the information allowing recovery of the descriptor structure comprises descriptor numbers and relative and/or absolute positions of the portions of a common format within the descriptors. Using this information it is possible to collect the appropriate values from the database and to sort these values in a useful manner. Every time a descriptor is stored in the database, it receives a univocal descriptor number. In addition, for every portion of a common format of the descriptor the relative position within the descriptor and/or the absolute position within the relation is derived. The descriptor numbers and the relative and/or absolute positions are stored in the relations together with the portions of a common format.

Favourably, the information allowing recovery of the descriptor structure further comprises an indicator for the next upper hierarchical level of the portions of the common format within the descriptors. This facilitates a fast reconstruction of descriptor parts by starting from an arbitrary part of the descriptor back (level oriented) to the head of the descriptor. The next upper hierarchical level is a helpful information for reconstructing a descriptor part when only the relative or absolute word position of a portion of a common format is known, for example as a query result.

According to another aspect of the invention, the method further comprises the step of storing a descriptor index in the relational database. Such a descriptor index allows to store additional information for every descriptor and to easily find a specific descriptor in the database.

Advantageously, the descriptor index comprises at least descriptor numbers, absolute positions of the descriptors within the relations and/or unique identifiers for the descriptors. Storing this information in the descriptor index allows fast access to a specific descriptor in the relations. The absolute position of a descriptor within the relations is favourably defined as the absolute position of its first portion of a common format. Since the unique identifiers are often needed, a faster access to this kind of data is provided by storing the unique identifier in the descriptor index. In addition to the mentioned information, other types of information can be stored in the descriptor index, like for example the number of levels of a descriptor or other useful data.

Favourably, the hierarchical data format comprising descriptors corresponds to the extensible markup language. Since XML is widely used and well accepted, this allows a wide range of applications of the inventive method.

According to the invention, the common formats comprise at least elements, attributes and text. These types of common formats are sufficient for many applications. While the elements are mainly used for structuring the descriptors, the text contains the information which is in general searched in a query. Attributes are mostly used for characterising elements.

Favourably, the common format text is further divided into string values and integer values. In this way faster searches can be achieved, since the relations which have to be searched for a query become smaller. A query for a string value, for example, is performed in the relation containing only string values, which contains less elements than a relation containing both string and integer values.

Advantageously, the common formats further comprise namespace information. This feature is especially interesting for XML and allows to prevent collisions between different documents when markup intended for one document uses the same element types or attribute names as another document for different purposes.

Favourably, a database model for mapping a hierarchical data format comprising descriptors to a relational database management system uses a method according to the invention. Such a database model is capable of realizing simple and fast queries, flexible handling of diverse descriptor formats, simple and fast reconstruction of descriptors, and simple and fast insertion of descriptors. In addition, such a database model can easily be implemented with existing relational database management systems.

Advantageously, an apparatus for reading from and/or writing to recording media uses a method or a database model according to the invention for mapping a hierarchical data format comprising descriptors to a relational database management system. Such an apparatus allows to store added value information in an existing relational database. A user of the apparatus can easily use and/or edit the added value information.

For a better understanding of the invention, exemplary embodiments are specified in the following description of advantageous embodiments with reference to the figures, using XML as an example for an hierarchical data format. It is understood that the invention is not limited to these exemplary embodiments and that specified features can also expediently be combined and/or modified without departing from the scope of the present invention. In the figures:
- Fig. 1a, 1b: show a simplified XML descriptor and its representation as an XML tree,
- Fig. 2: shows a database model according to the invention using a single relation,
- Fig. 3: shows a database model as in Fig. 2, but wherein additional information on the descriptor structure is stored,
- Fig. 4a, 4b: show the representations of an XML descriptor as in Fig. 1, but wherein the text comprises string values and integer values,
- Fig. 5: shows a database model similar to Fig. 2, but wherein elements, attributes, integer values, and string values are separated into different relations,
- Fig. 6: shows a database model similar to Fig. 3, but wherein repetitions inside the relations are eliminated by providing additional relations,
- Fig. 7: shows a typical metadata descriptor comprising namespace information, a unique identifier and links to other metadata descriptors,
- Fig. 8: shows a metadata stream comprising a plurality of metadata descriptors, and
- Fig. 9: shows a database model according to Fig. 6 comprising a descriptor index.

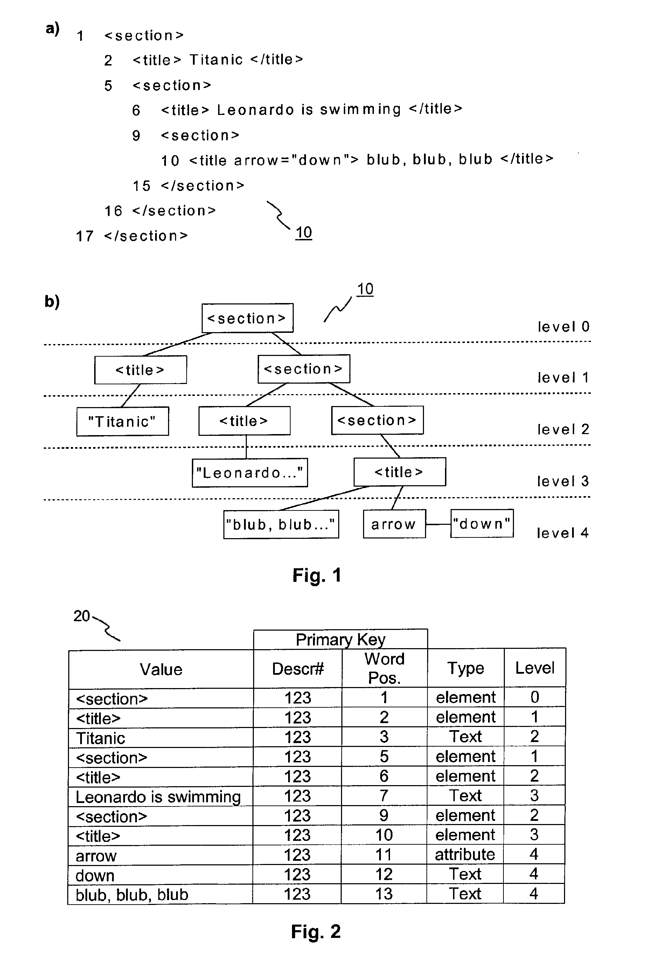

Fig. 1 shows in part a) a simplified example of an XML descriptor 10 and in part b) the corresponding representation as an XML tree. As can be seen from the figure, the exemplary descriptor 10 comprises a section, a subsection and a sub-subsection, each having a title. The title of the sub-subsection has an attribute "arrow" with the value "down". The descriptor 10 consists of a total of 17 words, wherein the text of each title counts as a single word, independent of the actual number of words. For example, "Leonardo is swimming" is a single "logical" word, though it comprises three "actual" words. The number given in each line of the descriptor 10 in part a) of the figure is the relative word position of the first word of each line within the descriptor 10. From the corresponding tree structure in part B of the figure, it can be seen that the descriptor 10 has five levels, namely level 0 to level 4. The tree structure is a helpful tool for illustrating the hierarchical relations between the different words of the descriptor 10.

In Fig. 2 a database model according to the invention is shown, wherein a single relation 20 is used. The relation 20 is represented by a table. The first column "Value" indicates the stored portion itself (the XML string). The second column "Descr#" indicates the univocal descriptor number inside the database management system. The column "Word Pos." contains the relative position of the stored part within the specific descriptor 10. "Descr##" and "Word Pos." taken together are a primary key of the relation 20, allowing the complete recovery of a descriptor 10. The type of each XML string is inclusively stored in the relation in the column "Type". In the example, the types comprise "element", "attribute" and "text". The last column "Level" contains the hierarchical level of each XML string as shown in Fig. 1B As can be seen, not all words of the descriptor 10 are stored in the relation 20. The "closing" words like </title> and </section> do not contain additional information and are not necessarily needed for recovery of the descriptor 10. They are, therefore, not stored in the database. It is, of course, possible to also store these words if necessary.

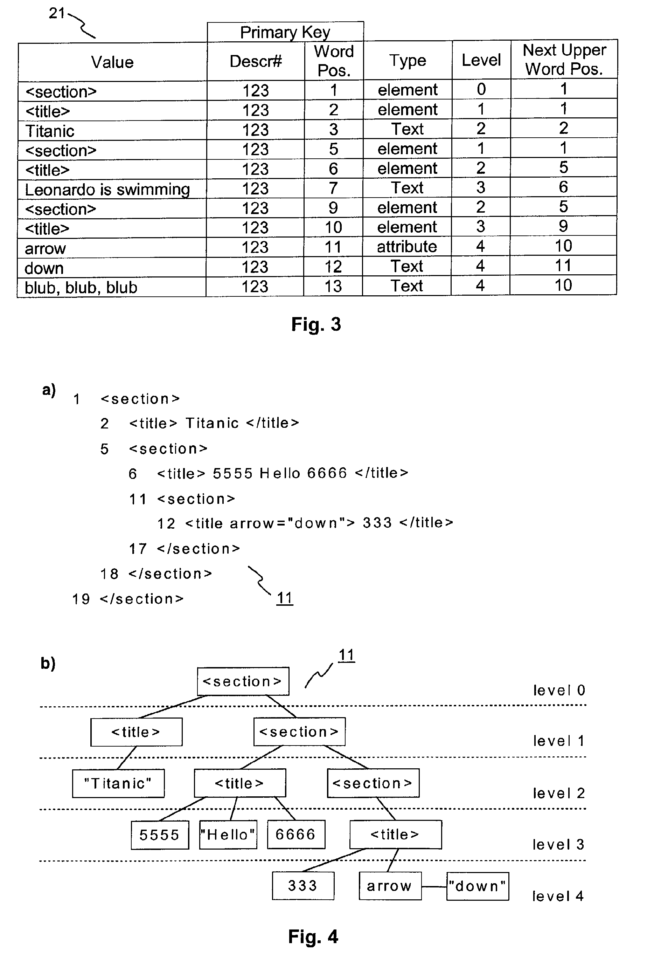

Fig. 3 shows a database model similar to Fig. 2, but wherein an additional column "Next Upper Word Pos." is included in the relation 21, which contains an indicator for the next upper hierarchical word of the XML string within the specific descriptor 10. This is a helpful information for recovering a descriptor part when only the word position of a portion of a common format is known, for example as a query result. A fast reconstruction of descriptor parts is facilitated by providing this additional information.

In Fig. 4 another simplified descriptor 11 similar to the one in Fig. 1 is shown. However, in this example the text consists of string values and integer values. As can be seen from part B of the figure, string values and integer values are separated and count as distinct "logical" words.

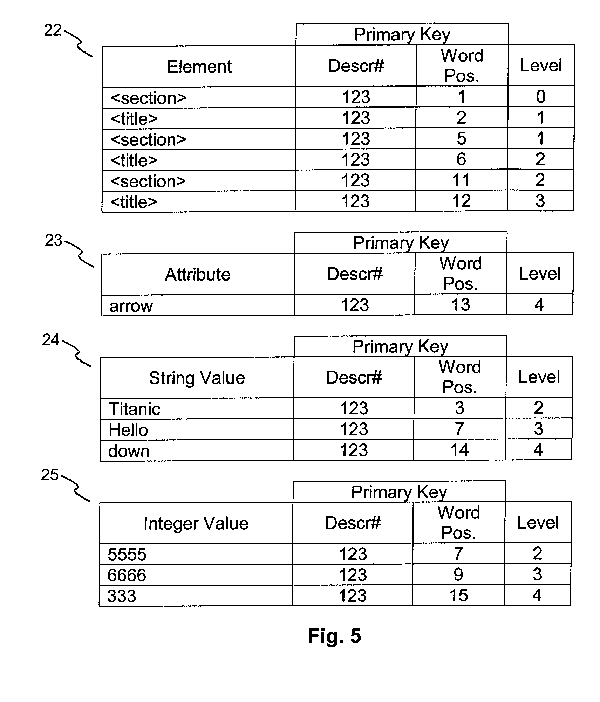

Fig. 5 depicts a database model similar to the one shown in Fig. 2. However, in this example the XML strings are separated into elements, attributes, string values and integer values, and stored in different relations 22, 23, 24, 25. This allows for faster searches inside the relations 22, 23, 24, 25. Due to the descriptor number and the word position it is still possible to recover the complete descriptor 11 from the different relations 22, 23, 24, 25. A value "Type" is not necessary in this embodiment, since every relation 22, 23, 24, 25 contains only a specific type.

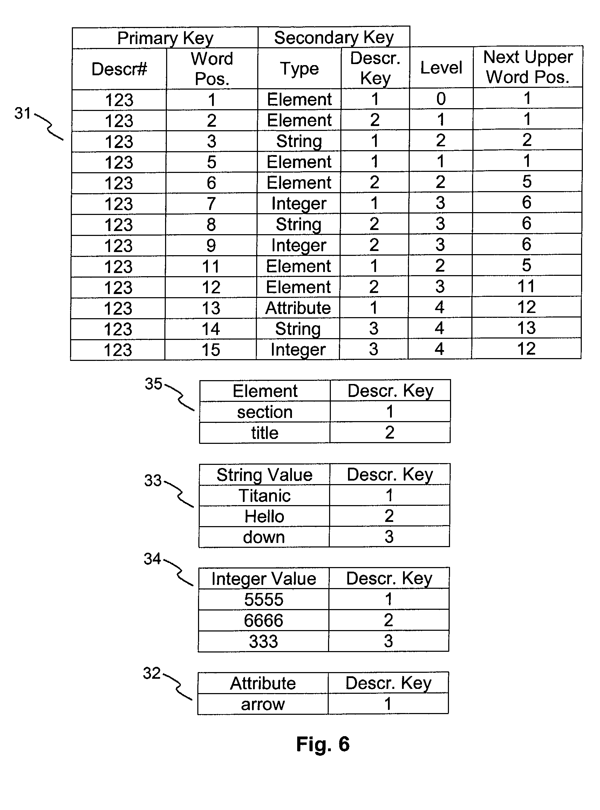

In Fig. 6 a further refinement of a database model according to the invention is shown. The database model is similar to the one shown in Fig. 3, however, repetitions inside the relation 31 are eliminated. This is achieved by providing additional relations 32, 33, 34, 35 ("secondary relations") for the elements, string and integer values, and attributes. For each XML string a value "Type" and a corresponding descriptor key "Descr. Key" are included in the "primary" relation 31. The descriptor key indicates the corresponding entry in the additional relation 32, 33, 34, 35 for the specific type of XML string. The columns "Type" and "Descr. Key" taken together can be regarded as a secondary key, since they link each XML string specified by a primary key with the specific value.

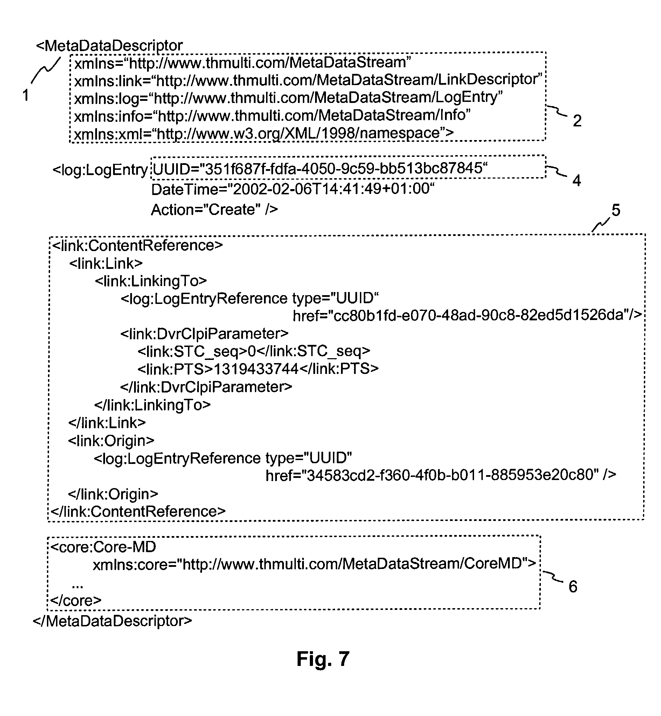

Fig. 7 shows a typical metadata descriptor 1. The actual content of the metadata descriptor is contained in the core 6. In addition, the metadata descriptor 1 comprises namespace declarations 2, a unique identifier 4 and links 5 to other metadata descriptors. The namespace declarations 2 and the unique identifier 4 are stored in special places inside the database management system since they are often needed. The intention is to provide a fast access to this kind of data. The namespace declarations 2 are only valid for the specific metadata descriptor 1. The unique identifier 4 allows an unambiguous identification of the metadata descriptor 1.

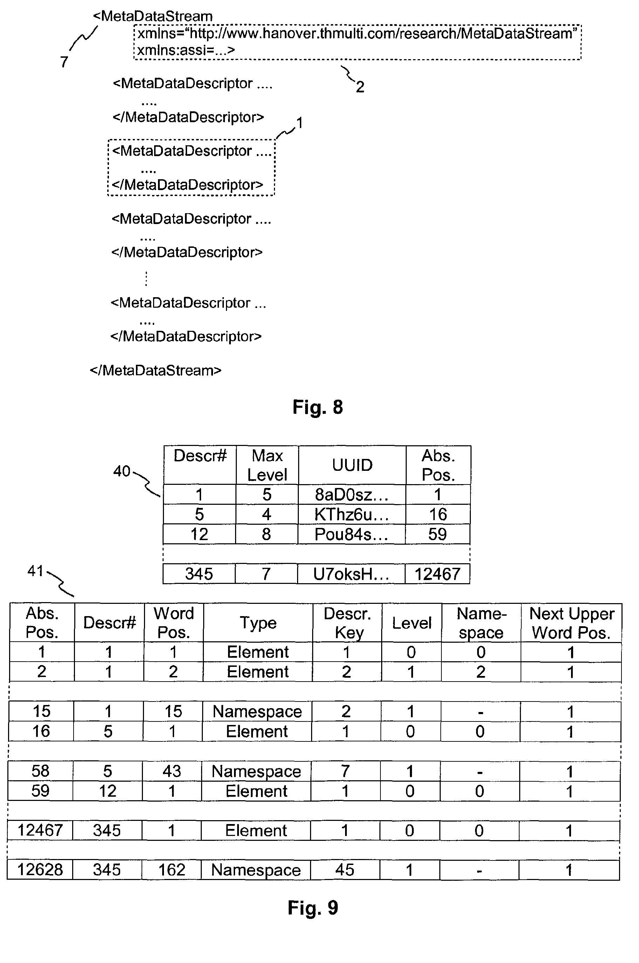

Fig. 8 depicts a metadata stream 7 comprising a plurality of metadata descriptors 1 like the one shown in Fig. 7. In addition, the metadata stream 7 comprises namespace declarations 2, which are valid for all metadata descriptors 1 inside the specific metadata stream 7.

In Fig. 9 the use of a descriptor index 40 is shown. The descriptor index 40 contains for each descriptor stored in the database the descriptor number, the number of levels of the descriptor ("Max Level"), its unique identifier ("UUID") and its absolute position ("Abs. Pos.") within the relation 41. The corresponding relation 41 is similar to the one shown in Fig. 6. However, it further comprises the absolute position of each XML string and the namespace declarations. The additional relations containing elements, string values, integer values and so on, which are addressed by the secondary key, are not shown for sake of simplicity.

The database models shown in the figures have a plurality of advantages, such as:
- The flexibility to store all kind of descriptors by providing a separation of the incoming XML stream into common formats.
- Fast queries due to the restricted number of relations. For example, a text query has to be performed only in a small number of relations, like "string value" or "element", i.e. only in such relations where strings are stored.
- Fast implementation of such a database model into a database management system due to the restricted number of relations. Other database models need at least one relation for each descriptor type.
- Fast recovery of descriptors back to XML format due to the specific modelling of the database, i.e. by using the attributes "Descr#" and "Word pos.".
- Fast recovery of descriptor parts by providing the additional information "Next Upper Word Pos.". It is helpful when starting from an arbitrary part of the descriptor back (level oriented) to the head of the descriptor.

## Claims

1. Method for mapping a hierarchical data format comprising descriptors (1, 10, 11) to a relational database management system, **characterized in that** the method comprises the steps of:
separating the descriptors (1, 10, 11) into portions of a common format, and;
storing the portions of a common format in relations (20, 21, 22...) in the relational database.

2. Method according to claim 1, further comprising the step of providing independent relations (22, 23,...,32, 33,...) for the common formats.

3. Method according to claim 1 or 2, further comprising the step of storing information allowing recovery of the descriptor structure in the relations (20, 21, 22...).

4. Method according to claim 3, **characterized in that** the information allowing recovery of the descriptor structure comprises descriptor numbers and relative and/or absolute positions of portions of a common format within the descriptors (1, 10, 11).

5. Method according to claim 4, **characterized in that** the information allowing recovery of the descriptor structure further comprises an indicator for the next upper hierarchical level of the portions of a common format within the descriptors (1, 10, 11).

6. Method according to claim 4 or 5, further comprising the step of storing a descriptor index (40) in the relational database.

7. Method according to claim 6, **characterized in that** the descriptor index (40) comprises at least descriptor numbers, absolute positions of the descriptors (1, 10, 11) within the relations (20, 21, 22...) and/or unique identifiers (4) for the descriptors (1, 10, 11).

8. Method according to anyone of the preceding claims, **characterized in that** the hierarchical data format comprising descriptors (1, 10, 11) corresponds to the Extensible Markup Language.

9. Method according to anyone of the preceding claims, **characterized in that** the common formats comprise at least elements, attributes and text.

10. Method according to claim 9, **characterized in that** the common format text is divided into string values and integer values.

11. Method according to claim 9 or 10, **characterized in that** the common formats further comprise namespace information (2).

12. Database model for mapping a hierarchical data format comprising descriptors (1, 10, 11) to a relational database management system, **characterized in that** it uses a method according to any of the preceding claims.

13. Apparatus for reading from and/or writing to recording media, **characterized in that** it uses a method according to any of claims 1-11 or a database model according to claim 12 for mapping a hierarchical data format comprising descriptors (1, 10, 11) to a relational database management system.
